# EUROPÄISCHE PATENTSCHRIFT

(11) **EP 0 888 159 B1**
(45) Veröffentlichungstag und Bekanntmachung des Hinweises auf die Patenterteilung: **04.07.2001**
(21) Anmeldenummer: 97906171.0
(22) Anmeldetag: 05.03.1997
(51) Int. Cl.: B01D 29/15

(54) **REGENERIERBARES FILTERELEMENT ZUM EINBAU IN EINEN DRUCKFILTERBEHÄLTER**
REGENERATABLE FILTER ELEMENT FOR INSTALLATION IN A PRESSURE FILTER CONTAINER
ELEMENT FILTRANT REGENERABLE SE MONTANT DANS UN RECIPIENT A FILTRE SOUS PRESSION

(30) Priorität: 08.03.1996 DE 19609002
(43) Veröffentlichungstag der Anmeldung: 07.01.1999
(73) Patentinhaber: Brandolisio, Sergio, 41468 Neuss (DE)
(72) Erfinder: ARTELT, Heinz, 51375 Leverkusen (DE)
(74) Vertreter: Schmauder, Klaus Dieter
(86) Internationale Anmeldenummer: EP9701111
(87) Internationale Veröffentlichungsnummer: WO9732650

(56) Entgegenhaltungen:
- DE-A- 2 852 108
- DE-A- 4 235 316
- US-A- 3 438 502
- US-A- 3 722 539
- US-A- 3 750 889

## Beschreibung

Die Erfindung betrifft ein regenerierbares Filterelement zum Einbau in einen Druckfilterbehälter gemäss Oberbegriff des Anspruches 1.

### Stand der Technik

Filterelemente der eingangs genannten Art sind mehrfach bekannt. Ein solches Filterelement dient zum Trennen von Feststoffen und Flüssigkeiten einer Suspension. Dabei wird die Suspension mittels Druck von aussen durch ein Filtertuch nach innen gedrückt, wobei sich die Flüssigkeit vom Feststoff mechanisch trennt. Die filtrierte Flüssigkeit wird durch ein Zentralrohr abgeführt. Der Feststoff bleibt auf der äusseren Oberfläche des Filtertuches haften und bildet einen Filterkuchen, der periodisch beim Erreichen einer bestimmten Dicke zur Regenerierung des Filterelementes entfernt werden muss. Hierzu wird in der Regel der Flüssigkeitsstrom abgestellt, der Filterkuchen getrocknet und durch Rückspülen mittels Luft von innen nach aussen vom Filtertuch abgelöst. Hierzu ist ein plötzliches Aufblähen des Filtertuches nötig, damit der Kuchen auch vollständig abgeworfen werden kann.

Aus der EP-B-0 066 921 ist nun ein gattungsgemässes regenerierbares Filterelement bekannt, dessen Stützkörper aus einem Bündel von Rohren gleichen Durchmessers besteht, die um das Zentralrohr gleichen Durchmessers angeordnet sind. Durch diese Anordnung entsteht eine wellenartige Oberfläche, wobei das Wellental zwischen zwei Wellenbergen einen sich verjüngenden Spalt bildet, der vom Filtertuch während des Filtervorganges wellenartig überbrückt werden soll, in den das Filtertuch jedoch eingeklemmt werden kann. Gleichzeitig erfolgt in diesem Wellental eine Anhäufung von ausfiltrierten Feststoffen, die nur schwer zu entfernen ist, da die Filterstoffe einerseits in den Spalt zwischen den Wellenbergen eingeklemmt sind und zum anderen nicht ausreichend getrocknet werden können, so dass die feuchten Filterkuchenrückstände das Filtertuch zusätzlich in den Spalt einklemmen. Zum Reinigen des Filterelementes ist deshalb einerseits eine vergrösserte Trocknungszeit erforderlich und andererseits ein erhöhter Druck für das von innen aufzublähende Filtertuch erforderlich. Letzteres führt zu einer erhöhten Verschleissanfälligkeit des Filtertuches bei der Reinigung, wobei der Verschleiss durch die scharfe Faltenbildung des Filtertuches im engzulaufenden Spalt zwischen den Rohren und dem Stützkörper erhöht wird. Überdies besteht bei einem solchen Filterelement die Gefahr, dass der Filterkuchen, insbesondere wenn er aus porösem Material besteht, sich an den Wellenbergen vorzeitig löst und abfällt, das heisst noch bevor eine Austragsöffnung eines Druckfilterbehälters geöffnet ist, in dem das Filterelement angeordnet ist. In einem solchen Fall wird das Filterelement beziehungsweise der Druckfilterbehälter derart verschmutzt und verstopft, dass eine Reinigung ohne umfangreiche und damit kostspielige Demontage nicht mehr möglich ist, was überdies zu grossen Ausfallzeiten führt.

Aus der EP-B-0 352 404 ist ein weiteres Filterelement der eingangs genannten Art bekannt, bei dem der Stützkörper aus einem perforierten zylindrischen Stützmantel besteht, der über Stützelemente mit Abstand vom Zentralrohr gehalten ist. Auf der Aussenseite des Stützmantels sind in Längsrichtung verlaufende und über den Umfang des Stützmantels verteilt angeordnete Nocken vorhanden. Mit diesen Nocken soll eine geringere Beanspruchung des Filtertuches durch Vermeidung starker Knickungen erzielt werden. Weiter sollen die Nocken eine gleichmässigere Dicke des Filterkuchens liefern. Schliesslich will man einen einfachen Aufbau erreichen. Die Nocken bilden allerdings scharfe Unstetigkeitsstellen, die dennoch durch relativ scharfe Kanten zwischen den Nocken und dem Stützmantel des Stützkörpers scharfe Falten bildet, die einerseits zu einer Beschädigung des Filtertuches führen und andererseits das Reinigen des Filtertuches erschweren können. Die vorstehenden Kanten der Nocken begünstigen ein Aufbrechen des Filterkuchens und damit ein vorzeitiges ungewolltes Abfallen von Filterkuchenteilen, die zu einem Verstopfen des Filterelementes führen können.

Die DE-U-1 944 823 beschreibt kein gattungsgemässes Filterelement, denn das Zentralrohr dient nicht zum Abführen des Filtrates sondern zur Aufnahme eines Zugankers zum Befestigen des Filterelementes. Damit der Stützkörper am oberen Ende an einem Deckelteil und am unteren Ende am Zentralrohr dichtend zur Anlage gebracht werden kann, ist der das Zentralrohr umgebende Stützmantel als Wellrohr ausgebildet, damit er sich balgartig der entsprechenden Einbaulänge anpasst und als Stützköper für das Filtertuch dient. Um diese Funktion zu erfüllen, verlaufen die Wellen des Wellrohres entweder senkrecht zur Längsachse des Zentralrohres oder gegebenenfalls auch geneigt dazu beispielsweise schraubenlinienförmig jedoch nicht wie erfindungsgemäss vorgesehen in Längsrichtung sondern quer zur Längsrichtung. Das Filtertuch wird bandförmig um den Stützkörper gewickelt, so dass es an den äusseren, relativ eng aneinanderliegenden und überdies scharfkantigen Wellenbergen des Stützkörpers aufliegt und es kann und soll sich nicht an die Wellentäler des Stützkörpers anschmiegen, denn dazu wäre eine Ueberlänge und lose Anordnung des Filtertuches notwendig, was wiederum während des Filtrierens eine Sackbildung und damit keinen gleichmässigen Kuchenaufbau zur Folge hätte. Ein Regenerieren des Filterelementes mittels Regeneriermedium ist nicht vorgesehen. Da das Filtertuch straff auf den Wellenbergen des Stützkörpers aufliegt, würde ein Einbringen von Regeneriermedium in den Ringraum kein Aufblähen des Filtertuches bewirken, da durch die Umwicklung des Stützkörpers mit dem Filtertuch ein Ausdehnen gerade verhindert wird. Dadurch, dass die Wellen quer zur Längsrichtung des Filterelementes ausgerichtet sind, ergibt sich im Querschnitt auch keine wellenförmige Ausbildung sondern diese wäre allenfalls im Längsschnitt vorhanden. Im Querschnitt sind praktisch nur ein Wellenberg und ein Wellental pro Umfang vorhanden, die überdies nicht gerundet sondern scharfkantig sind und somit Unstetigkeitsstellen bilden, welche die erfindungsgemäss zu beseitigenden Nachteile beinhalten. Die Wellentäler sollen sicherstellen, dass das durch das Filtertuch durchtretende Filtrat auch abgeführt werden kann und hierzu sind in den Wellentälern Durchbrechungen vorgesehen. Damit kann sich selbst bei einem theoretisch unterstellten Rückspülen kein Dralleffekt einstellen.

Aus der US-A-3 438 502 ist ein regenerierbares Filterelement bekannt, bei dem ein Filtertuch analog dem Filterelement der DE-U-19 44 823 auf einem als Wellrohr ausgebildeten Stützkörper aufliegt, dessen relativ eng aneinanderliegende Wellen im wesentlichen quer zur Längsrichtung der Filterelementes ausgerichtet sind. Das Filtertuch ist in Längsrichtung über den Stützkörper gespannt und kann sich deshalb nicht an die Wellentäler anschmiegen, denn dazu wäre eine Ueberlänge und lose Anordnung des Filtertuches notwendig, was wiederum während des Filtrierens eine Sackbildung und damit keinen gleichmässigen Kuchenaufbau zur Folge hätte. Das Filtertuch kann somit auch keinen das Reinigen verbessernden Drall erzeugen. Im übrigen sind die Wellentäler nicht gerundet sondern bilden einen scharfen Spalt, der ein Anschmiegen des Filtertuches gerade verunmöglicht und verbietet und zu den bereits oben erwähnten Nachteilen hinsichtlich Filtertuchbeschädigung und unstetem Filterkuchenaufbau führen würde.

Ausserdem enthält das Filterelement kein bis an das untere Ende des Filterelementes reichendes Zentralrohr, wodurch eine gleichmässige Trocknung verhindert wird.

Die DE-U-1 892 225 beschreibt wiederum ein Filterelement, das nicht regenerierbar ist. Es enthält keinen wellenförmigen Stützmantel mit gerundeten Wellenbergen und Wellentälern sondern ein Stützgitter, das aus in Längsrichtung verlaufenden Stützstäben gebildet ist, über die unter einem Winkel von 45° Drähte schraubenlinienförmig gewickelt sind. Die Drähte verlaufen auch nicht in Längsrichtung des Filterelementes sondern aufgrund der Anordnung unter 45° im Grenzbereich zwischen längs und quer und können deshalb den für die Rückspülung erforderlichen Dralleffekt nicht erzeugen. Hinzu kommt, dass die Drähte eine linienartige Auflage und somit Unstetigkeitsstellen bilden, die für Hochdruckfilteranlagen ungeeignet ist, da sie zu einer Beschädigung des Filtertuches führen können und ausserdem verhindern sie einen gleichmässigen Aufbau eines Filterkuchens, da dieser an den Draht-Auflagestellen zum Brechen neigt und damit zum unkontrollierten Abbröckeln des Filterkuchens. Dieses bekannte Filterelement liefert also keine stabile wohldefinierte Auflage des Filtertuches an gerundeten Wellenbergen und Wellentälern eines Stützmantels.

Die DE-A-1 536 928 beschreibt wiederum eine nicht regenerierbare Filterpatrone, die einen Stützkörper aufweist, der durch äussere und innere Stege gebildet wird, die gegenläufig wendelförmig verlaufen und unter einem Winkel von 45° zueinander geneigt sind. Dadurch wird ein netzartiges Gebilde mit Öffnungen und Kanälen gebildet, die zur Erhöhung der Strömungskapazität der zu filtrierenden Flüssigkeit dienen. Als Filtrierelement wird eine Filzplatte verwendet, die gewisse tragende Eigenschaften haben muss, damit sie auf den Rippen aufliegt und sich nicht an und zwischen diese anschmiegt. Ein Regenerieren eines solchen Filterelementes ist nicht möglich und auch nicht vorgesehen, sondern die Filterpatronen sind so gestaltet, dass das Filterhülsenelement leicht auszuwechseln ist, wenn seine Filterkraft erschöpft ist.

### Darstellung der Erfindung

Aufgabe der Erfindung ist es, ein gattungsgemässes Filterelement der eingangs genannten Art zu schaffen, welches eine hohe Sicherheit gegen unbeabsichtigtes Lösen des Filterkuchens verbunden mit einer gründlichen und dennoch schonenden Reinigung des Filtertuches ermöglicht.

Diese Aufgabe wird gelöst durch die kennzeichnenden Merkmale des Anspruches 1. Dadurch, dass der Stützkörper durch einen Stützmantel gebildet wird, der im Querschnitt wellenförmig ausgestaltet ist, lassen sich sowohl für den Wellenberg wie für die Wellentäler sanfte Rundungen erzielen, die einerseits einen gleichmässigeren Aufbau des Filterkuchens bewirken und andererseits scharfe Unstetigkeitsstellen vermeidet. Dadurch wird eine gleichmässigere Belegung des Filtertuches mit Filterkuchen erreicht. Weiter wird das Aufbrechen des Filterkuchens und ein ungewolltes Abstürzen von Teilen des Filterkuchens ebenso verhindert wie scharfe Knickungen des Filtertuches, die zur Beschädigung des Filtertuches führen könnten. Die wendelförmige Anordnung der Wellen verleihen überdies dem Filtertuch beim Aufblasen durch Luft einen gewissen Drall, der das Entfernen des Filterkuchens verbessert, ohne dass übermässige schädliche Drücke oder Druckimpulse angewendet werden müssten. Das neue Filterelement zeichnet sich also durch eine hohe Sicherheit gegen unbeabsichtigtes Lösen des Filterkuchens aus, verbunden mit einer gründlichen und dennoch schonenden Reinigung des Filtertuches.

Vorteilhafte Ausbildungen des Filterelementes sind in den Ansprüchen 2 bis 5 beschrieben.

Für die Ausgestaltung des wellenförmigen Stützmantel ergeben sich verschiedene Möglichkeiten. So können die Rundungsradien der Wellenberge und der Wellentäler verschiedene Grössen aufweisen. Vorteilhafter ist jedoch eine Ausgestaltung nach Anspruch 2. Auch für den Steigungswinkel ergibt sich ein grosser Bereich, wobei eine Ausgestaltung nach Anspruch 3 bevorzugt ist.

Es ist denkbar, dass der Stützmantel derart ausgebildet ist, dass er mit den Wellentälern direkt auf dem Zentralrohr aufliegt. Vorteilhafter ist jedoch eine Ausgestaltung nach Anspruch 4, die die Durchflussrate erhöht.

Für die Oeffnungungen des Stützmantels ergeben sich die verschiedensten Ausgestaltungen. Besonders bevorzugt ist eine Ausbildung nach Anspruch 5.

### Kurze Beschreibung der Zeichnung

Ein Ausführungsbeispiel des erfindungsgemässen Filterelementes wird nachfolgend anhand der Zeichnung näher beschrieben, dabei zeigen:
- Figur 1: das Filterelement in Ansicht auf die Längsseite und teilweise geschnitten;
- Figur 2: das Filterelement der Figur 1 im Querschnitt, wobei das Filtertuch in der oberen Hälfte am Stützmantel anliegt;
- Figur 3: die Oeffnungen des Stützmantels.

### Wege zur Ausführung der Erfindung

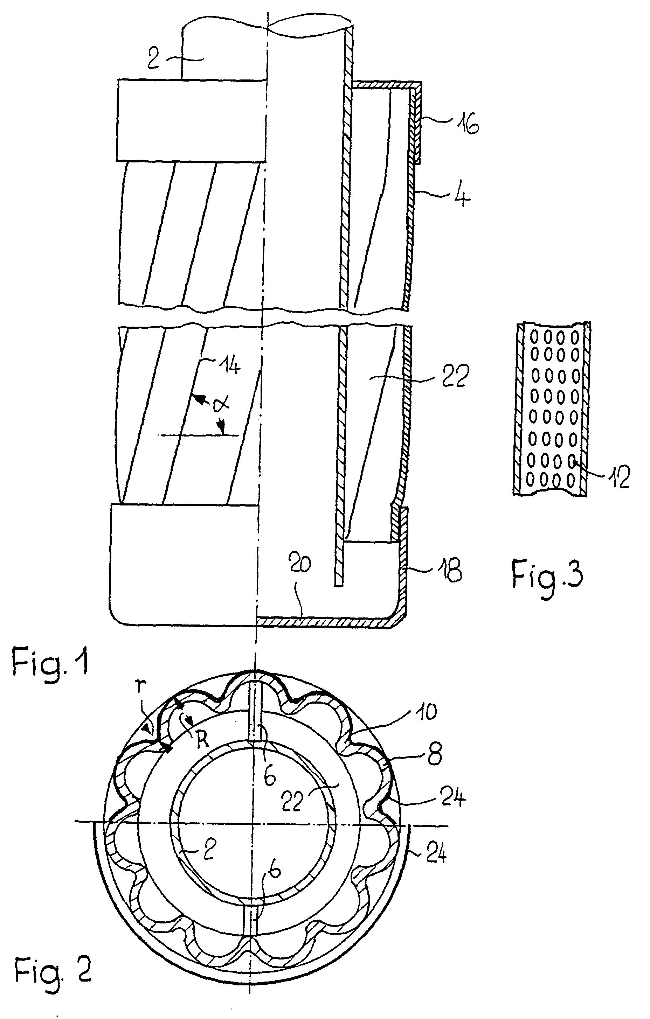

Das in den Figuren 1 bis 3 dargestellte Filterelement ist zum Filtrieren von Feststoffen enthaltenden Suspensionen in bekannter (beispielsweise gemäss EP-A-0 347 620) jedoch nicht näher dargestellter Weise in einem Druckfilterbehälter mit einer Austragsöffnung zum periodischen Austragen eines abzustossenden Filterkuchens angeordnet. Das Filterelement enthält ein Zentralrohr 2, das von einem als Stützmantel 4 ausgebildenten Stützkörper umgeben ist, der mit Abstand vom Zentralrohr 2 angeordnet und mittels Stützelementen 6 auf Abstand gehalten ist. Der Stützmantel 4 weist im Querschnitt eine wellenförmige Ausbildung auf, wobei sich Wellenberge 8 mit dem Rundungsradius R und Wellentäler 10 mit Rundungsradius r abwechseln. Der Rundungsradius R der Wellenberge 8 ist hier grösser als der Rundungsradius r der Wellentäler 10 dargestellt. Die aus Wellenbergen und Wellentälern gebildeten Wellen sind überdies wendelförmig angeordnet, wobei sie einen Steigungswinkel α von vorzugsweise 60° bis 85° aufweisen. Der Stützmantel 4 ist überdies mit Oeffnungen 12 versehen, die einen ovalen Grundriss aufweisen, wobei die grössere Achse der Oeffnungen parallel zum Wendelverlauf 14 des Filterelementes ausgerichtet ist. Das Filterelement ist am oberen Ende mit einer Ringkappe 16 abgeschlossen, die den Ringbereich zwischen dem Stützmantel 4 und dem Zentralrohr 2 dichtend abschliesst. Am unteren Ende ist das Filterelement mit einer Bodenkappe 18 dichtend abgeschlossen, deren Boden 20 mit Abstand vom unteren Ende des Zentralrohres 2 angeordnet ist, um das Abfliessen des Filtrates aus dem Ringraum 22 durch das Innere des Zentralrohres 2 zu ermöglichen.

Das Filterelement ist von einem Filtertuch 24 umgeben, das in nicht näher dargestellter Weise beispielsweise mittels Schlauchschellen an den Kappen befestigt ist. Das Filtertuch schmiegt sich beim Filtrieren an den Umfang des Stützmantels 4 an, wie sich aus der oberen Hälfte der Figur 2 ergibt. Zum Reinigen des Filterelementes wird zunächst der Filtriervorgang unterbrochen und der nicht näher dargestellte Druckfilterbehälter entleert, in dem das Filterelement angeordnet ist. Dann wird der Filterkuchen getrocknet. Anschliessend wird bei geöffneter Austragsöffnung des Druckfilterbehälters zur Rückspülung im Ringraum 22 Druckluft angelegt, wodurch das Filtertuch 24 nach aussen gebläht wird, wie dies in der unteren Hälfte der Figur 2 dargestellt ist. Durch das Aufblähen wird der nicht gezeigte Filterkuchen vom Filtertuch gelöst und fällt nach unten und durch die Austragsöffnung aus dem Druckfilterbehälter. Dieser Lösungsvorgang wird durch die wendelförmige Ausbildung der Wellen unterstützt, so dass weder ein übermässiger noch ein pulsierender Druck des Rückspülmittels angewendet werden muss.

### BEZUGSZEICHENLISTE

- α: Steigungswinkel
- 2: Zentralrohr
- 4: Stützmantel
- 6: Stützelement
- 8: Wellenberg (Radius R)
- 10: Wellenberg (Radius r)
- 12: Oeffnung
- 14: Wellenverlauf
- 16: Ringkappe
- 18: Bodenkappe
- 20: Boden
- 22: Ringraum
- 24: Filtertuch

## Patentansprüche

1. Regenerierbares Filterelement zum Einbau in einen Druckfilterbehälter, welches ein Zentralrohr (2) für den Filtrat-Abfluss und einen dieses umgebenden gelochten Stützkörper (4) aufweist, über welchem ein Filtertuch (24) angeordnet ist, wobei das Zentralrohr (2) am unteren Ende mit einem Ringraum (22) zwischen dem Zentralrohr (2) und dem Stützkörper (4) kommuniziert und der Ringraum (22) am oberen Ende dichtend abgeschlossen ist und wobei in den Ringraum (22) ein Regeneriermedium einbringbar ist, dadurch gekennzeichnet, dass der Stützkörper (4) als im Querschnitt wellenförmiger Stützmantel (4) mit gerundeten Wellenbergen (8) und gerundeten Wellentälern (10) ausgebildet ist, an die sich das Filtertuch (24) anschmiegt, wobei die Wellen (8,10) in Längsrichtung des Stützmantels (4) wendelförmig verlaufen.

2. Filterelement nach Anspruch 1, dadurch gekennzeichnet, dass der Rundungsradius (R) der Wellenberge (8) und der Rundungsradius (r) der Wellentäler (10) gleich sind.

3. Filterelement nach Anspruch 1 oder 2, dadurch gekennzeichnet, dass der Steigungswinkel α der Wellen 60° bis 85° beträgt.

4. Filterelement nach einem der Ansprüche 1 oder 3, dadurch gekennzeichnet, dass der Stützmantel über Stützelemente (6) mit radialem Abstand vom Zentralrohr (2) angeordnet ist.

5. Filterelement nach einem der Ansprüche 1 bis 4, dadurch gekennzeichnet, dass der Stützmantel (4) ovale Oeffnungen (12) aufweist, wobei die Hauptachse der Oeffnungen (12) parallel zum Wellenverlauf (14) angeordnet ist.

## Claims

1. A filter element that can be regenerated, adapted to be mounted into a pressurised filter vessel, having a central pipe (2) for discharging a flow of filtrate surrounded by a punched support body (4) which a filter cloth (24) is arranged to cover, the central pipe (2) communicating at its lower end with an annular space (22) provided between the central pipe (2) and the support body (4), and the annular space (22) being terminated tight at its upper end, it being possible to introduce a regeneration medium into the annular space (22), characterized in that the support body (4) is embodied as a support mantle (4) of wavy-shaped cross-section having rounded wave crests (8) and rounded wave troughs (10), the shape of which is closely followed by the filter cloth (24), the wavy shapes (8, 10) extending helically in the longitudinal direction of the support mantle (4).

2. A filter element according to claim 1, characterized in that the curvature radius (R) of the wave crests (8) and the curvature radius (r) of the wave troughs (10) are equal to each other.

3. A filter element according to claim 1 or 2, characterized in that the lead angle α of the waves pitch is 60° to 80°.

4. A filter element according to any one of claims 1 or 3, characterized in that the support mantle is arranged at a radial space from the central pipe (2) by means of support elements (6).

5. A filter element according to any one of claims 1 to 4, characterized in that the support mantle (4) has oval openings (12), the major axis (12) of which is arranged to be parallel to the direction of the waves.

## Revendications

1. Elément filtrant régénérable destiné au montage dans une cuve de filtre pressurisé, comportant un tube central (2) destiné à l'écoulement d'évacuation du filtrat et entouré d'un corps support perforé (4) sur lequel est disposé un tissu de filtre (24), le tube central (2) communiquant en son extrémité inférieure avec un espace annulaire (22) situé entre le tube central (2) et le corps support (4), et l'espace annulaire (22) se terminant de façon étanche en son extrémité supérieure, un milieu régénérant pouvant être introduit dans l'espace annulaire (22), caractérisé en ce que le corps support (4) est réalisé sous forme de manteau support (4) à section transversale ondulée présentant des crêtes d'ondulation (8) arrondies et des creux d'ondulation (10) arrondis dont le tissu de filtre (24) épouse la forme, les ondulations (8, 10) s'étendant de façon hélicoïdale dans la direction longitudinale du manteau support (4).

2. Elément filtrant selon la revendication 1, caractérisé en ce que le rayon de courbure (R) des crêtes d'ondulation (8) et le rayon de courbure (r) des creux d'ondulation (10) sont égaux l'un à l'autre.

3. Elément filtrant selon la revendication 1 ou 2, caractérisé en ce que l'angle d'inclinaison α du pas des ondulations vaut 60° à 80°.

4. Elément filtrant selon l'une des revendications 1 ou 3, caractérisé en ce que le manteau support est disposé à distance radiale du tube central (2) au moyen d'éléments de support (6).

5. Elément filtrant selon l'une des revendications 1 à 4, caractérisé en ce que le manteau support (4) présente des ouvertures ovales (12), le grand axe des ouvertures (12) étant disposé parallèlement à la direction des ondulations.
